# EUROPEAN PATENT APPLICATION

(11) **EP 0 663 535 A1**
(43) Date of publication of application: **19.07.1995**
(21) Application number: 94100523.3
(22) Date of filing: 14.01.1994
(51) Int. Cl.: F16B 19/05

(54) **Component mounting assembly and method**

(71) Applicant: EMHART INC., Newark, Delaware 19711 (US)
(72) Inventor: Naito, Nobuharu, Hamamatsu-shi, Shizuoka-ken 430 (JP); Yamada, Katsumi, Toyohashi-shi, Aichi-ken 440 (JP); Toyonaga, Seiichi, c/o Toyota Motor Corporation, Aichi-ken 471 (JP); Nakamura, Kimikazu, c/o Toyota Motor Corporation, Aichi-ken 471 (JP); Ogawa, Tatuya, c/o Toyota Motor Corporation, Aichi-ken 471 (JP)
(74) Representative: Grünecker, Kinkeldey, Stockmair & Schwanhäusser Anwaltssozietät

(57) **Abstract**

A component mounting assembly (1) comprises a bolt (3) welded to a panel (2) and a hollow collar (6) so as to fix a component (5) placed on the body with a penetrate hole (4) of the component through which the bolt passes. The collar (6) comprises a flange (8) larger than the hole (4) and a body portion (9) to be coupled to the bolt, the body portion having an inner diameter initially slightly larger than an outer diameter of the bolt. When the collar flange (8) is swaged with being pressed on the panel, the inner diameter of the body portion (9) is reduced so as to be fixed to the bolt (3).

Therefore, the component can be clamped by swaging of the collar flange without skills required, and mounted on the panel by works on one side of a panel including a vehicle body panel. Moreover, in operation, the mounted component can be easily removed and mounted again by rotation of the collar.

## Description

### Technical Field

The present invention relates to an assembly and a method for mounting a component on a panel such as a vehicle body panel by means of a screw member, including a bolt.

### Background Art

Conventionally, a nut has been welded to a vehicle body panel or a bracket to fasten a component to the body panel or a bolt, or a weld bolt has been welded to a vehicle body panel or a bracket to fasten a component to the body panel with a nut in order to mount a component on a vehicle body panel. In these methods of mounting components, a bolt or nut has to be screwed, generally using an impact wrench so that a bolt or nut is screwed skillfully so as not to be excessively or insufficiently clamped, and moreover it is difficult to set and control its clamp torque.

Japanese U.M. Publication No. 48-28991 and Japanese Patent Laid-Open No. 57-69108 disclose structures, which are not ones for mounting components on a vehicle body panel, to connect two panels each other by inserting a bolt from one side of both panels to be connected, inserting a hollow collar into a bolt shank portion projecting from the other side of the panels, urging the collar against the two panels and swaging the collar by a setting tool so as to reduce an inner diameter of a collar body portion to fix the collar to the bolt.

Nevertheless, the connecting structure shown as the above publications requires work to be done on both sides of panels, that is, bolt insertion at one side to the panels and collar putting through and setting the bolt shank portion at the other side of the panels. In order to mount components on the body panel, it is hardly possible to work on both sides in view of the specificity of the body panel.

Japanese Patent Laid-Open No. 61-144415 discloses a workpiece fixing method for swaging a pin member with a tubular collar. In this method, the pin is fixed on one side of panels and the collar is inserted and fastened to a pin shank portion from the other side of the panels so that it is also necessary to work on both sides of the body panels as same as previous disclosures. In U.S. Patent No. 5,171,115, the following method is further disclosed. A pin member is fixed to a panel, a flange is formed in the pin member and a component is contacted with the flange to swage a collar into a pintail of the pin member from the other side of the component so as to be fixed to a panel. In this method, while the component can be fixed to the panel from the one side of the panel by using the pin member protruding from the panel, the collar cannot be removed after fixing. It is therefore impossible to remove the component.

### Disclosure of the Invention

Accordingly, it is an object of the present invention to provide an assembly and a method for mounting components on a panel which requires no skill nor torque control in clamping, allows components to be mounted by working on one side of the panel such as a vehicle body panel or the like, and facilitates the removal of mounted components.

In order to achieve the above-mentioned object, according to the present invention, there is provided a component mounting assembly comprising a bolt and a hollow collar, the collar having a body portion to be coupled to the bolt, the body portion having an inner diameter initially larger than an outer diameter of the bolt, the inner diameter of the body portion being reduced when the body portion is tightly fit to the bolt, characterized in that the bolt is fixed to a panel, the component having a preparatory hole through which the bolt passes is placed on the panel, and the collar body portion is urged against the panel and swaged to reduce the inner diameter of the body portion, whereby the collar is fixed to the bolt to mount the component on the panel.

The present invention further provides a method for mounting a component on a panel by using a bolt and a hollow collar, the collar having a body portion to be coupled to the bolt, the body portion having an inner diameter initially larger than an outer diameter of the bolt, the inner diameter of the body portion being reduced when the body portion is tightly fitted to the bolt, comprising steps of fixing the bolt to the panel, placing the component having a preparatory hole through which the bolt passes, on the panel, and swaging the collar body portion with being urged against the panel to reduce the inner diameter of the collar body portion, whereby the collar is fixed to the bolt to mount the component on the panel.

In accordance with the present invention, a bolt can be welded to a panel. The bolt can be fixed to the panel by swaging. A blind rivet comprising a mandrel and a sleeve adjacent to a larger diameter mandrel head portion can be further used for a bolt. The blind rivet is secured to the panel by pulling the mandrel to thereby buckle the sleeve when the collar body portion is swaged.

The collar may be made of one of metal or a combination of a metal and plastic. Moreover, a portion to be engaged with a tool of a hexagonal configuration may be previously formed in the collar or may be formed when the collar body portion is swaged. The collar can be swaged in the direction of the reduced diameter from radial and outward direction of the collar body portion. Alternatively, the collar may be axially pressed so that the collar is radially deformed under pressing force. Upon this pressing, the collar is limited in radial and outward deformation so as to be formed with the tool engaging portion of a hexagonal configuration as an inner diameter of the collar is reduced.

The present invention still further provides an assembly and a method for mounting a component by using a connecting member made of plastic comprising of a bolt portion formed with an external threaded portion at the intermediate position thereof, a nut portion outside the bolt portion and a bent portion located between the nut portion and a head of the bolt portion for connecting the bolt to the nut portion, the component being mounted on the panel by pulling the bolt portion out of the nut portion to bend the bent portion, and supporting the panel and the component with the bent portion and the nut portion, whereby it is possible to work for mounting from one side of the panel and facilitate the removal of the component.

### Brief Description of Accompanying drawings

Fig. 1 is a half-sectional front view of a component mounting assembly according to the present invention.

Fig. 2 is an explanatory illustration showing how a collar is connected to a bolt.

Figs. 3 (A) and (B) are front views of variations of the bolt.

Figs. 4 (A) through (C) are sectional views of the variations of the collar.

Figs. 5(A) and (B) show an another embodiment of a component mounting assembly with using an another bolt, wherein 5(A) shows the state prior to fixing, and 5(B) shows the state after fixing.

Figs. 6(A) and (B) are an embodiment of a component mounting assembly using an another collar, wherein 6(A) shows the state prior to fixing, and 6(B) shows the state after fixing.

Figs. 7 (A) and (B) show further another variations for fixing a bolt to the panel.

Figs. 8 (A) through (C) shows an another embodiment using a blind rivet for a bolt.

Fig. 9 is shows further another embodiment which an outer surface of a collar is deformed into a hexagonal configuration as a diameter of the collar is reduced by using a setting tool.

Figs. 10 (A) and (B) show a status which the tool is removed from the embodiment of Fig. 9, wherein 10(A) shows the state prior to swaging of the collar, and the 10(B) shows the state after swaging of the collar.

Figs. 11 (A) and (B) are sectional views taken along line A-A of Fig. 9, wherein 11 (A) shows the state prior to swaging the collar, and 11 (B) shows the state after swaging of the collar.

Figs. 12 (A) through (C) shows still further another embodiment of the present invention using a connecting member made of plastic, wherein 12 (A) shows the status prior to mounting of a component to a panel, 12 (B) shows the state after mounting of the component to the panel, and 12 (C) shows the state which the component is removed from the panel.

### Best Mode of Carrying out of the Invention

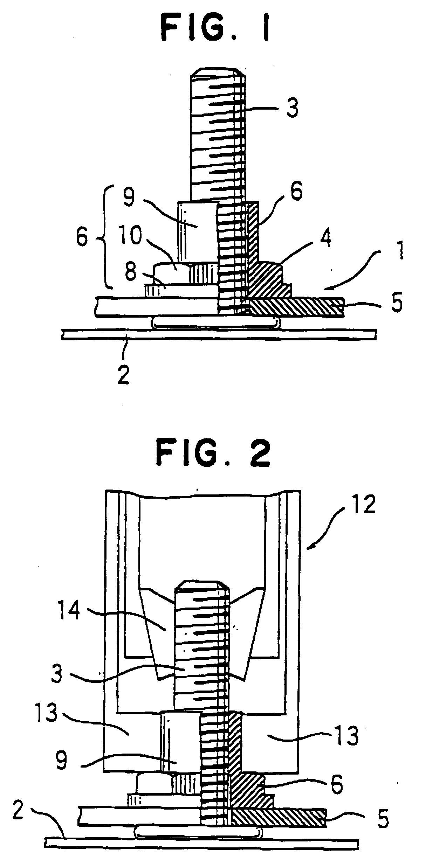

The present invention will now be described with reference to accompanying drawings which show preferred embodiments of the present invention. Fig. 1 shows a first embodiment of a component mounting assembly in accordance with the present invention. The component mounting assembly 1 comprises a bolt 3 including a weld bolt or a stud bolt welded to a panel 2 such as a vehicle body panel, and a hollow collar 6 for fixing a component 5 to the panel 2 with the component having a penetrate hole 4 through which the bolt 3 passes and being placed on the panel 2. The collar 6 is made of metal including aluminum or stainless steel or the like. The collar 6 comprises a flange 8 having a size larger than the preparatory hole 4 of the component 5, and a body portion 9 to be swaged onto the bolt 3. In this embodiment, a tool engagement portion 10 of a hexagonal configuration in viewed from the top is formed on the sides between the flange 8 and the body portion 9. The tool engaging portion 10 is engaged with a tool such a wrench or the like to facilitate the rotation for removing the attached collar. The flange 8 is not necessary if an outer diameter of the body portion 9 is larger than that of the preparatory hole 4 of the component.

In the component mounting assembly 1 as shown in Fig. 1, the component 5 is mounted on the panel 2 in the following method. An inner diameter of the body portion 9 of the collar 6 is initially formed slightly larger than an outer diameter of the bolt 3 so as to be easily inserted into the bolt 3. Therefore, the placement of the component 5 on the panel 2 and the insertion of the collar 6 into the bolt 3 can be easily done on one side of the panel 2, i.e., from the top of the drawing. In order to swage the collar 6 onto the bolt 3, the body portion 9 of the collar 6 is supported by a nose grip 13 of a blind rivet setting tool 12 or a similar tool and the tip of the bolt 3 is held with jaws 14 of the tool, and then the tool 12 is actuated as shown in Fig. 2. Despite the action of the jaws 14 to pull out the bolt 3, the bolt 3 firmly welded to the panel remains fixed, and by the reaction, the collar body portion 9 is swaged while the grip 13 presses the collar 6 against the panel 2 so that the inner diameter of the body portion 9 is reduced to fit into the threads of the bolt 3. Thus, the collar 6 is fixed to the bolt 3 and the component 5 is mounted on the panel 2. In experiments, a thrust force of 600 Kgf as the fixing force has been obtained. This force corresponds to the force attained by clamping a bolt of M6 to a nut of M6 with a torque of 80 Kgf · cm.

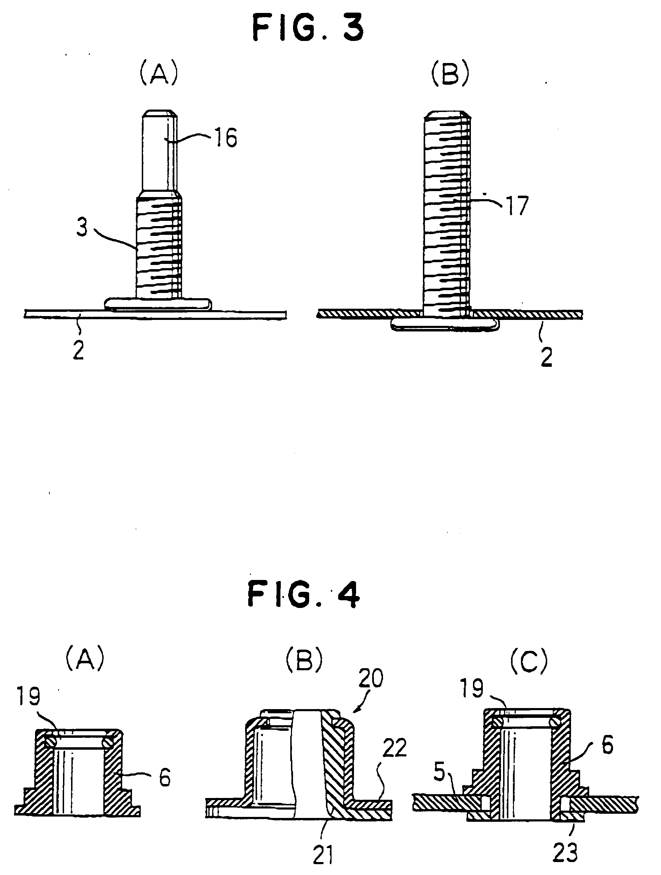

Fig. 3 illustrates variations of the bolt to be used. The upper portion of the bolt 3 as shown in Fig. 3 (A) is not threaded. The upper portion 16 functions as a part to be pulled by the jaws 14 so that the bolt can be easily held by the jaws. Fig. 3 (B) shows a weld bolt 17 passing through a panel hole. This bolt offers high resistance to pulling force so that further stronger swaging force can be obtained.

Fig. 4 shows variations of a collar. A collar 6 as shown in Fig. 4 (A) is provided with an engagement ring 19 to be engaged with the bolt 3. The collar 6 can be fixed temporarily by the engagement ring 19 when it is coupled to the bolt 3. A collar 20 as shown in Fig. 4 (B) comprises an inner plastic portion 21 and an outer metal portion 22. Thus, the collar is advantageous in that it weighs less and its inner diameter can be easily reduced for coupling to the bolt 3. The inner plastic portion 21 may be formed with an engagement pawl so that temporarily fixing function can be obtained in the same manner as the collar 6 of Fig. 4 (A). The collar 6 of Fig. 4 (C) is made to allow a washer 23 to be attached to its lower end. This collar 6 can be previously attached to the component 5 which is conveniently held by hand when the collar is fitted to the bolt 3. To provide the collar 6 with the engagement ring 19 allows the component 5 to be also fixed temporarily.

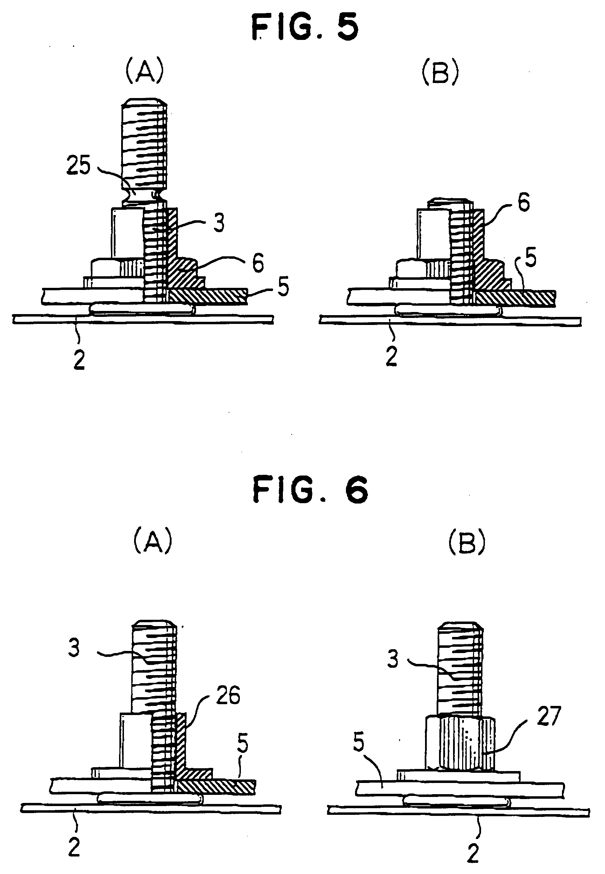

Fig. 5 shows still another variation of the bolt 3. As shown in Fig. 5 (A), a narrowed diameter portion 25 is formed at a mid height of the bolt 3. An upper portion of the narrowed diameter portion 25 is broken under the pulling force of the jaws 14 when swaged so that the useless or obtrusive portion can be removed as shown in (B).

Still another variation of the collar is shown in Fig. 6. In this embodiment, the collar body portion 26 is not formed with a hex portion prior to swaging operation as shown in Fig. 6 (A). Once the nose grip 14 of the tool narrows the body portion in swaging, a portion 27 engaged with a tool is formed in a hexagonal configuration as shown in Fig. 6 (B).

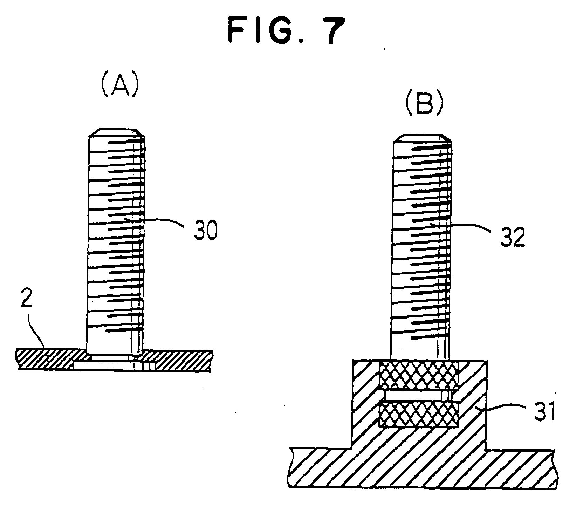

Figs. 7 (A) and (B) show an another embodiment for fixing a bolt to the panel 2. In Fig. 7 (A), a clinch bolt 30 is fixed to the panel 2 by swaging. Fig. 7 (B) shows a bolt 32 fixed to a plastic portion 31 of the panel 2. In the case of Fig. 7 (B), the bolt 32 may be fixed by press-inserting or by insertion molding.

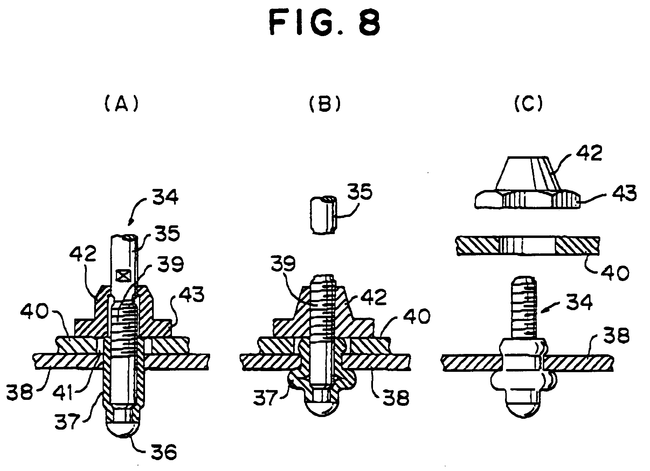

Figs. 8 (A) through (C) show further another embodiment in accordance with the present invention. In this embodiment, a bolt 34 is constructed with a blind rivet. The bolt 34 known as the blind rivet comprises a mandrel 35 and a sleeve 37 adjacent to a larger diameter head portion 36 of the mandrel. Both the mandrel head 36 and the sleeve 37 are first inserted into a hole of a panel 38 and the mandrel 35 is pulled by a setting tool for blind rivet so that the sleeve 37 is deformed to be expanded so as to be fixed the bolt to the panel. According to the present invention, the mandrel 35 is formed with a screw 39 at the portion exposed from the sleeve 37 longitudinally. The sleeve 37 as shown in Fig. 8 is not provided with a flange which is to be formed at an opposite side of the mandrel head portion. This is because the bolt 34 may be fixed to the panel 38, but not fixed to a component 40. Thus, when a preparatory hole 41 of the component 40 has a larger diameter, a flange having a diameter smaller than that of the hole may be provided in the sleeve 37. Further, a hollow collar 42 is slightly engaged with the screw portion 39 of the mandrel 35 of the bolt 34 same as other embodiments.

A tool engagement portion 43 of a hexagonal configuration is formed below the collar 42.

In Fig. 8 (B), in order that the collar 42 is swaged to the bolt 34 as the bolt 34 is set to the panel 38, the mandrel 35 is pulled by the blind rivet setting tool. The sleeve 37 is deformed to be expanded while the collar 42 is pressed radially inwardly from the top. At the same time, the inner diameter of the collar is reduced to be narrowed corresponding to the threads of the screw 39 to form an internal thread. This operation is continued until the mandrel 35 is broken so that the bolt 34 is fixed to the panel 38 at the same time when the collar 42 is fixed to the bolt 34 to thereby mount the component 40 on the panel 38. When the collar 42 is rotated by the tool applied to the tool engagement portion 43, the component 40 can be removed as shown in Fig. 8 (C). The component 40 is also able to be mounted again by rotation of the collar 42.

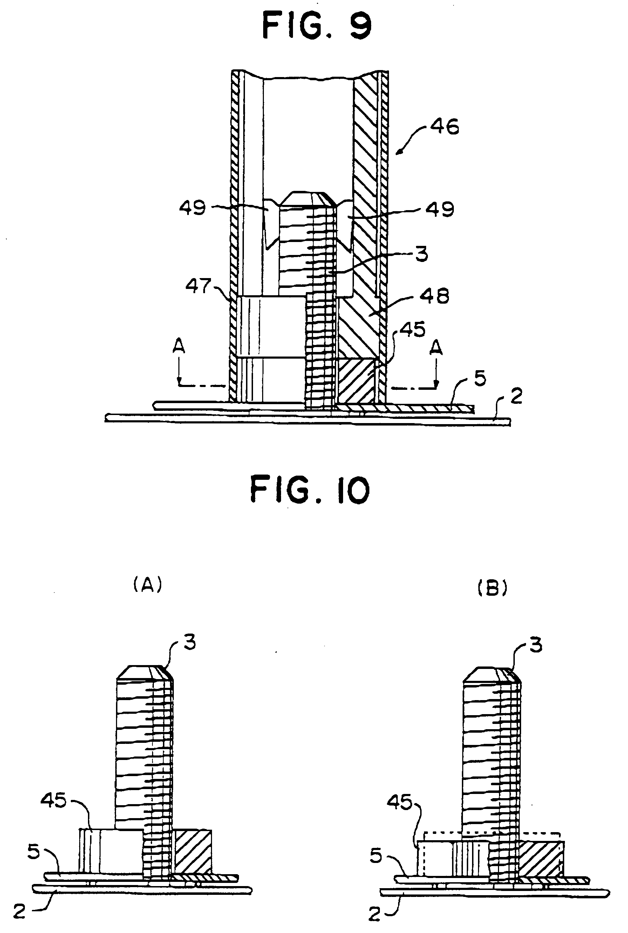

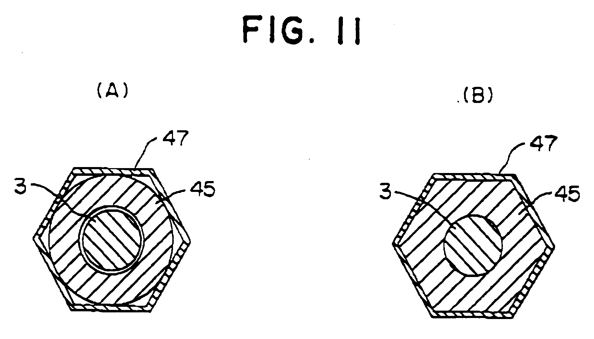

Figs. 9 through 11 illustrate still further another embodiment. This embodiment relates to an improvement of the deformation into a hexagonal configuration of the body portion of the collar 26 as shown in Fig. 6. In Fig. 6, it has been difficult to both reduce a diameter of a collar hole and deform into a hexagonal configuration when the collar is swaged because of the small deformation of the collar material. In this embodiment, a collar 45 is formed in a ring configuration having a diameter prior to swaging smaller than an effective diameter after swaging and a axial height prior to swaging larger than a height after swaging. A setting tool 46 is provided with a hexagonal member 47 which forms the outer wall thereof and encloses the collar 45 by extending up to the edge of the tool, and a pusher 48 which presses the collar 45 against the panel 2 and the component 5. Fig. 10 (A) and Fig. 11(A) show a condition prior to swaging of the collar. The collar 45 is of a ring configuration having a small diameter into internal contact with the hexagonal member 47.

In order to mount the component 5 on the panel 2, the collar 45 is held at the edge of the hexagonal member 47 of the setting tool 46, placed to receive the bolt 3 and contacted with the component 5. At the same time, jaws 49 of the setting tool 46 holds the edge of the bolt 3 and the pusher 48 urges the top surface of the collar 45 to press it, When the setting tool is actuated, the jaws 49 serves to pull out the bolt 3 upwardly. As the bolt 3 retains to be fixed to the panel 2, the pusher 48 strongly presses the top surface of the collar 45 by reaction of the pulling force. Under the pressing force, the collar 45 is deformed so that the height thereof becomes lower as shown in Fig. 10 (B) and the inner diameter of the collar 45 is reduced as shown in Fig. 11 (B) to be formed with an internal thread corresponding to the thread of the bolt 3 and an outer portion extending radially outwardly is confined by the hexagonal member 47 to be formed of a hexagonal configuration. The material for the collar 45 may not be limited to metal so far as the deformation of the material can be permitted. The deformation of the collar 45 into the hexagonal configuration and the engagement with the bolt are sufficiently satisfied. Thus, the clamp torque of the collar is large even re-use thereof. As a molding member deforms the collar, a plastic material can be deformed under aid of heating. Therefore, the collar can be made of a variety of materials. Moreover, the collar prior to swaging has a smaller diameter so that a number of collars can be contained in an automatic collar supplying apparatus. Further, the size of the collar becomes smaller so that the length of the bolt can be shortened.

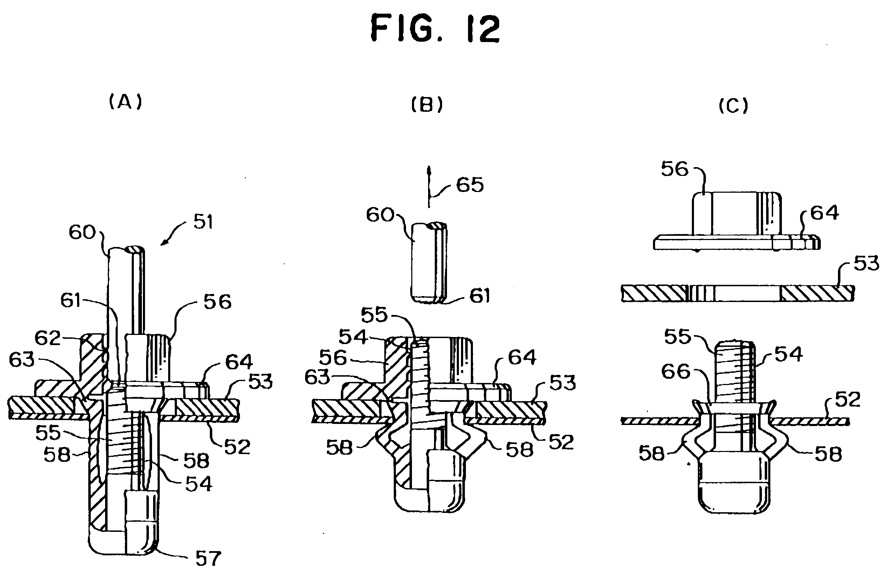

Figs. 12 (A) through (C) show still another embodiment of the present invention. In this embodiment, a component is not mounted on a panel by a combination of a bolt and a collar, but a component 53 is mounted on a panel 52 by a connecting member 51 made of plastic. The connecting member 51 comprises a bolt portion 55 extending longitudinally at the center and forming with a externally threaded portion 54 at the intermediate portion thereof, a nut portion 56 outside the bolt portion 55, and a bent portion 58 located between the nut portion 56 and a head portion 57 at the bottom of the bolt portion 55 for connecting the nut portion to the bolt portion. The bolt portion 55 has a top grip portion 60 and a small diameter portion 61 located between the grip portion and the externally threaded portion 54 in addition to the head portion 57 and the externally threaded portion 54. The outer surface of the nut portion 56 is formed with a hexagonal configuration so that it can be adapted to engage with tools including a wrench. The inner surface of the nut portion 56 is provided with a protrusion 62 engaged with the threaded portion 54 of the bolt portion. The nut portion 56 is formed with a thin portion 63 located at an upper position slightly apart from the connecting portion with the bent portion 58 so that the nut portion 56 can be separated into an upper portion and a lower portion. The bent portion 58 is formed with flexible arms extending parallelly outside the bolt portion 55. In the illustrated embodiment, a pair of bent portions are formed at the side of the bolt portion 55.

In order to mount the component 53 on the panel 52 by means of the connecting member 51, the head portion 57 of the connecting member 51 is first inserted Into the holes of the panel 52 and component 53, and a flange 64 of the nut portion 56 is contacted with the component 53. Next, the grip portion 60 is pulled by a tool such as a blind rivet setting tool as shown in the arrow 65 of Fig. 12 (B). By the pulling force, an intermediate portion of the bent portion 58 is bent radially and outwardly so that the expanded bent portion 58 is contacted with the surface of the panel. When the grip portion 60 is further pulled out, the bolt portion 55 is broken at the small diameter portion 61 while the bent portion 58 further bends. The nut portion 56 engages with the externally threaded portion 54 and the bent portion 58 and the nut portion flange 64 support the panel 52 and component 53 therebetween to mount the component on the panel. The pulling force produced by the tool, that is, the bending force of the bent portion 58 can be determined by the resistance for breaking the small diameter portion 61. Thus, it is not necessary for an operator to adjust the pulling force of the tool. Fig. 12 (C) shows the case of removing the component 53 from the panel 52. That is, when the nut portion 56 is rotated, the nut portion 56 moves upwardly along the threaded portion 54 of the bolt portion 55. On the other hand, when the nut portion 56 is rotated, a lower part 66 of the nut portion connected to the bent portion 58 serves to prevent the nut portion 56 from rotating so that the nut portion is broken at the thin portion 63. Thus, only the upper part of the nut body moves upwardly so that the nut lower portion 66 remains in the bolt portion 55 with engaging with the threaded portion 54. As a result, the bent portion 58 retains with bending to remain to be mounted on the panel 52. The component 53 can be easily removed in the absence of the flange 64 of the nut portion 55. When the nut portion 56 is applied to the threaded portion of the bolt portion 55 and rotated, the component 53 can be mounted on the panel 52 again.

In accordance with this embodiments, it goes without saying that the component can be mounted from the one side of the panel, the bending force of the bent portion 58 is determined by selection of the resistance for breaking a breakable portion in the shank. Thus, it is not necessary for an operator to adjust for the pulling force of the tool and also require the skill for controlling a screwing torque. Further, the removal of the component can be easily obtained and re-use can be easily done. The component can be made of plastic so that a measure of rust prevention is not necessary resulting in reducing the component to be injured.

### Industrial Applicability

According to the present invention, a component can be mounted on a panel from one side of the panel only by an operation of a setting tool without any skill required in the case of clamping a bolt and nut. This clamping force can be obtained only by setting a value in the tool without relying on operator's skill. This means the control of the clamp torque for the bolt and nut is not required. And the component can be mounted on the panel only by working on one side with respect to the panel. Moreover, the attached component can be removed easily by the collar rotation.

## Claims

1. A component mounting assembly comprising a bolt and a hollow collar, said collar having a body portion to be coupled to the bolt, the body portion having an inner diameter initially larger than an outer diameter of the bolt, the inner diameter of the body portion being reduced when the body portion is tightly fixed to the bolt, characterized in that the bolt is fixed on a panel, the component having a preparatory hole through which the bolt passes is placed on the panel and the body portion of the collar is urged against the panel and swaged to the bolt to reduce the inner diameter of the body portion, whereby the collar is fixed to the bolt to mount the component on the panel.

2. An assembly in accordance with claim 1 wherein the bolt is welded to a panel.

3. An assembly in accordance with claim 1 wherein the bolt is fixed to a panel by swaging.

4. An assembly in accordance with claim 1 wherein a bolt comprises a blind rivet, said blind rivet comprising a mandrel and a sleeve adjacent to a larger diameter head portion of the mandrel, said blind rivet being secured to the panel by pulling out the mandrel to thereby buckle the sleeve when the collar body portion is swaged.

5. An assembly in accordance with claim 1 wherein the collar is made of metal.

6. An assembly in accordance with claim 1 wherein the collar is made of a combination of metal and plastic.

7. An assembly In accordance with claim 1 wherein the collar is axially pressed to be fitted around the bolt, the collar being limited in radial and outward deformation so that when the collar is deformed to have a larger outer diameter, the collar is deformed in a hexagonal configuration while an inner diameter of the collar is reduced.

8. An assembly in accordance with claim 7 wherein the collar is made of one of metal and plastic.

9. A method for mounting a component by using comprising a bolt and a hollow collar, said collar having a body portion to be coupled to the bolt, the body portion having an inner diameter initially larger than an outer diameter of the bolt, the inner diameter of the body portion being reduced when the body portion is tightly fitted to the bolt comprising the steps of ;
fixing the bolt to a panel,
placing the component on the panel, said component having a preparatory hole through which the bolt passes, and
swaging the collar body portion with being urged against the panel to reduce the inner diameter of the collar body portion, whereby the collar is fixed to the bolt to mount the component on the panel.

10. A method in accordance with claim 9 wherein the bolt is welded to a panel.

11. A method in accordance with claim 9 wherein the bolt is fixed to a panel by swaging.

12. A method in accordance with claim 9 wherein the bolt comprises a blind rivet, said blind rivet comprising a mandrel and a sleeve adjacent to a larger diameter head portion of the mandrel, said blind rivet being secured to the panel by pulling the mandrel to thereby buckle the sleeve when the collar body portion is swaged.

13. A method in accordance with claim 9 wherein the collar is made of metal.

14. A method in accordance with claim 9 wherein the collar is made of a combination of metal and plastic.

15. A method in accordance with claim 9 wherein the collar is axially pressed to be fitted around the bolt, the collar being limited in radial and outward deformation so that when the collar is deformed to have a larger outer diameter, the collar is deformed in a hexagonal configuration while an inner diameter of the collar being reduced .

16. A method in accordance with claim 15 wherein the collar is made of plastic, and said collar is heated when radial and outward deformation thereof is limited.

17. A component mounting assembly using connecting member made of plastic comprising a bolt portion formed with an externally threaded portion at the intermediate portions a nut portion outside the bolt portion and a bent portion located between the nut portion and a head of the bolt portion for connecting the bolt to the nut portion,
said component being mounted on the panel by pulling the bolt portion out of the nut portion to bend the bent portion, and supporting the panel and the component with the bent portion and the nut portion.

18. A component mounting method comprising the steps of ;
using a connecting member made or plastic comprising a bolt portion formed with an externally threaded portion at the intermediate portion, a nut portion outside the bolt portion and a bent portion located between the nut portion and the a head of the bolt portion for connecting the bolt to the nut portion.
pulling the bolt portion out of the nut portion to bend the bent portion, and
supporting the panel and the component with the bent portion and nut portion.

19. A connecting member made of plastic for using in the method in accordance with claim 18 comprising a bolt portion formed with an externally threaded portion at the intermediate position, a nut portion outside the bolt portion, and a bent portion located between the nut portion and a heed of bolt portion for connecting the bolt to the nut,
said bolt portion having a smaller diameter portion which can be broken by a predetermined pulling force, the nut portion being formed with a thin portion slightly apart from the connecting portion to the bent portion to thereby be separated an upper part and a lower part.
